# EUROPEAN PATENT SPECIFICATION

(11) **EP 1 098 307 B1**
(45) Date of publication and mention of the grant of the patent: **30.11.2005**
(21) Application number: 00309760.7
(22) Date of filing: 03.11.2000
(51) Int. Cl.: G11B 15/67, G11B 23/26

(54) **Threading mechanism for magnetic recording/reproducing apparatus**
Einfädelmechanismus für Magnetaufzeichnungs- / Wiedergabegerät
Mécanisme d'enfilage pour appareil d'enregistrement / de reproduction magnétique

(30) Priority: 05.11.1999 JP 31563399
(43) Date of publication of application: 09.05.2001
(73) Proprietor: NEC CORPORATION, Tokyo (JP)
(72) Inventor: Tsuchiya, Manabu, NEC Yonezawa Ltd., Yonezawa-shi, Yamagata (JP); Fujita, Kouji, NEC Yonezawa Ltd., Yonezawa-shi, Yamagata (JP)
(74) Representative: W.P. Thompson & Co.

(56) References cited:
- EP-A- 0 143 598
- EP-A- 0 932 155
- EP-A- 1 054 396
- WO-A-00/30090
- WO-A-00/30096
- WO-A-83/04453
- WO-A-98/44499
- US-A- 4 991 037
- US-A- 5 927 633
- US-A- 5 979 813
- US-A- 6 034 839

## Description

The present invention relates to a threading mechanism for a magnetic recording/reproducing apparatus. A particular apparatus to be described by way of example in illustration of the invention is for taking out a leader pin secured to one end of a magnetic recording tape from a single reel cartridge, moving the leader pin to a predetermined guide path and threading the magnetic recording tape around a reel in the apparatus.

WO 00/30090 (priority date: 12.11.1998; publication date: 25.05.2000) discloses a recording device having a drive means for the actuation of a cassette holder and of retaining means for a "tape pull-out element". Both the cassette holder and retaining means are moved by a drive means, the drive means including a motor, motor pinion and gear wheel transmission which comprises a retaining means drive gear wheel. The retaining means is pivoted via actuating pin by the retaining-means drive gear wheel, and a coupling pin is coupled with a pull-out element by the pivoting of the retaining means. The retaining means is rotated by the drive means from a standby position to an operating position.

WO 00/30096 (priority date 12.11.1998; publication date: 25.05.2000) discloses a recording device having a "tape pull-out element" and also a latching means for this "tape pull-out element". The device is arranged to receive a cassette which contains a magnetic tape, and a coupling pin connected thereto. The device includes a pull-out element for coupling to the coupling pin, and the pull-out element can be held in order to be coupled to the coupling pin with the aid of retaining means and is disengageable by the retaining means after coupling. Latching means are provided to enable/inhibit disengagement of the pull-out element by the retaining means. The latching means are constructed for cooperation with the coupling pin and the latching means only enable disengagement of the pull-out element by the retaining means when the coupling pin is correctly coupled to the pull-out element.

US-A-5927633 discloses a "parking seat" for a single reel tape cartridge. The "parking seat" comprises a cradle assembly which is slidably moveable within an access part of the cartridge along a path taken by the tape as it enters/exits the cartridge. The cradle assembly is biased in a tape exiting direction, and also has a notch for receiving a leader device attached to the tape when the tape is fully rewound onto the supply reel.

The document also discloses a reel-lock mechanism which allows the tape reel to be locked in one of a plurality of evenly spaced locking positions in order to prevent tape slippage around the reel when the tape is fully rewound onto the supply reel.

In a previously proposed threading mechanism as disclosed in EP 1054396 (priority date: 18.05.1999; publication date: 22.11.2000), when a cartridge loader for holding a cartridge is moved to the cartridge loading position of a deck base by a loader guide mounted on the deck base, a leader pin is held and guided to a reel through a guide path by a threader drive.

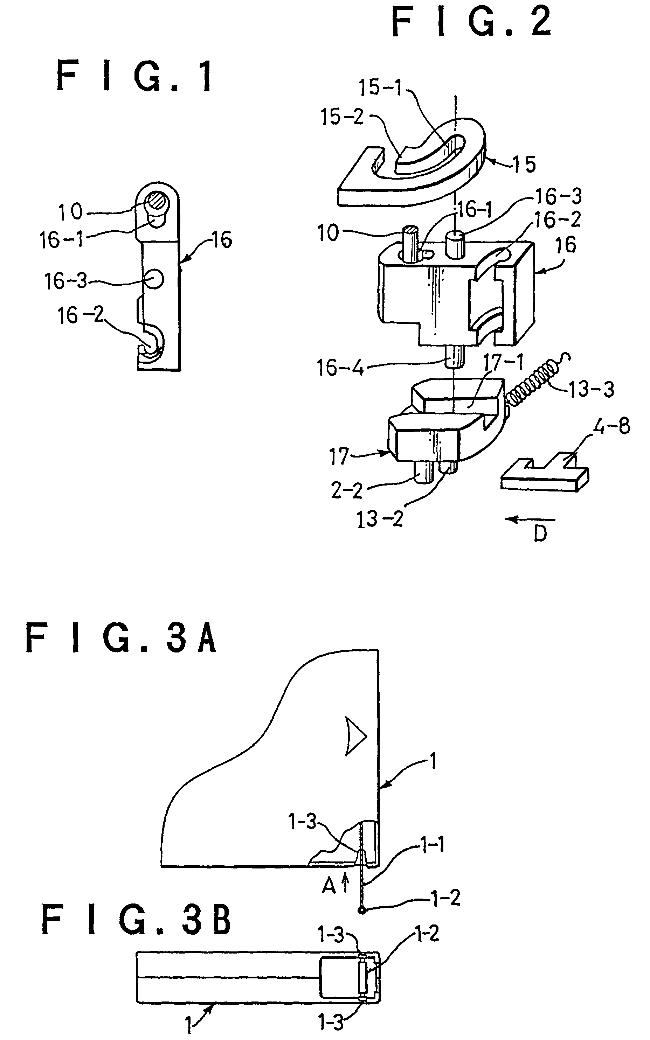

Reference will now be made to Figs. 1 and 2 of the accompanying drawings in which:-
Fig. 1 is a plan view showing a leader block for use in explaining the operation of the previously proposed threading mechanism disclosed in EP 1054396, and
Fig. 2 is an exploded perspective view showing a leader block for use in explaining the operation of the previously proposed threading mechanism disclosed in EP 1054396.

Referring to Figs. 1 and 2, the threading drive is designed so that a leader block 16 having a hook 16-2 which is hooked to the leader pin to hold the leader pin (not shown) is guided to a guide path (not shown) by a threading pin 10. At a cartridge loading position, the hook 16-2 is hooked to the leader pin through the operation of guides (guide grooves 15-1, 15-2) of a guide cam 15 and a retractor block 17 which are respectively secured to the deck base (not shown).

That is, the leader block 16 has pins 16-3 and 16-4 at the upper and lower portions thereof, and they are located in the guide grooves 15-1,15-2 and the groove 17-1 of the retractor block 17 respectively. When a retractor cam 4-8, provided to the cartridge loader (not shown), abuts against a retractor pin 13-2 of the retractor block 17 as the cartridge is loaded, the retractor block 17 is rotated around the pin 2-2 serving as the support shaft thereof against the tensile force of a retractor spring 13-3 and the-threading pin 10 is also moved to the guide path side, whereby the pins 16-3, 16-4 are slid in the guide groove 15-2 and the groove 17-1. During the sliding motion of these pins, the leader block 16 is rotated while being guided along the groove 15-2 and hooked to the leader pin. The pins 16-3, 16-4 are released from the guide grooves 15-1 and 17-1 by the time at which the loading operation is completed, and the leader block 16 is moved to the guide path while being guided by the threading pin 10.

In such a previously proposed threading mechanism, the leader block 16 is rotated by both the rotation of the retractor block 17 and the pulling operation of the threading pin 10 to the guide path side, whereby the leader pin is hooked by the hook and clamped by the leader block 16. Therefore, a stable operation cannot be achieved unless there is a synchronizing adjustment between the retractor block 17 and the threading pin 10 which is accurately carried out.

A threading mechanism for a magnetic recording/reproducing apparatus will be described below, by way of example in illustration of the invention, in which a clamping operation of a leader pin by a leader block is carried out by a simple rotational motion of the retractor block, thereby achieving a more stable operation.

One particular threading mechanism to be described below, by way of example in illustration of the present invention, is for taking out a leader pin secured to one end of a magnetic recording tape from a single reel cartridge, in which the leader pin is moved to a predetermined guide path and the magnetic recording tape is threaded around a reel in a magnetic recording/reproducing apparatus, the apparatus including a cartridge loader for holding a cartridge, a deck base upon which a loader guide is mounted for moving the cartridge loader to a cartridge loading position, and a threader drive for holding the leader pin and guiding the leader pin to the reel through the predetermined guide path when the cartridge loader is moved to the cartridge loading position, wherein the threader drive includes a leader block having a hook which holds the leader pin, the leader block is rotated to engage the hook with the leader pin in cooperation with a retractor cam provided to the cartridge loader and a retractor is provided to the deck base.

The following description and drawings disclose, by means of examples, the invention which is defined in the appended claims, whose terms determine the extent of the protection conferred hereby.

In the drawings:-
Figs. 3A and 3B are plan and front views showing a cartridge for a magnetic recording medium which is targeted to be threaded by a threading mechanism,

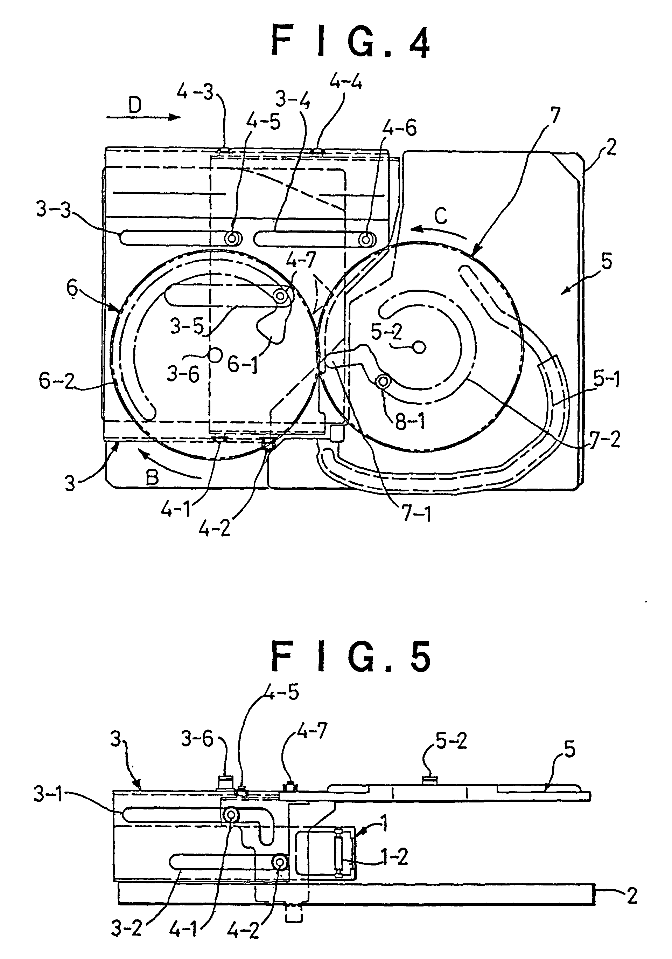

Fig. 4 is a plan view showing the overall construction of one apparatus,
Fig. 5 is a front view showing the main part of the apparatus shown in Fig. 4,

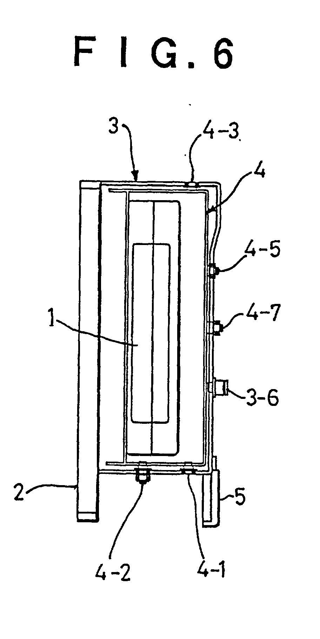

Fig. 6 is an end face view of the main part of the apparatus shown in Fig. 4,

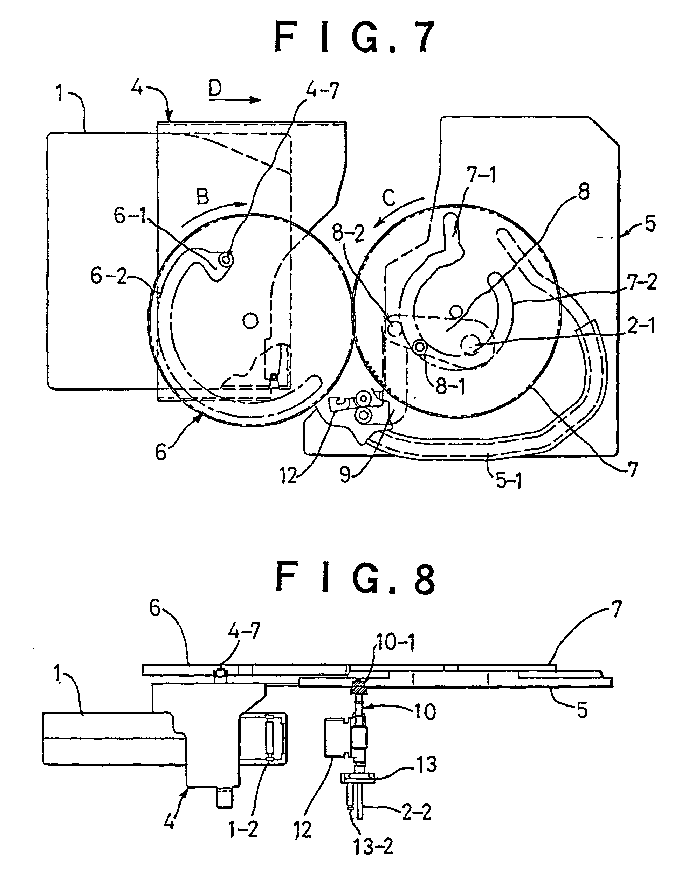

Fig. 7 is a plan view showing the overall construction of the apparatus before a cartridge is loaded,

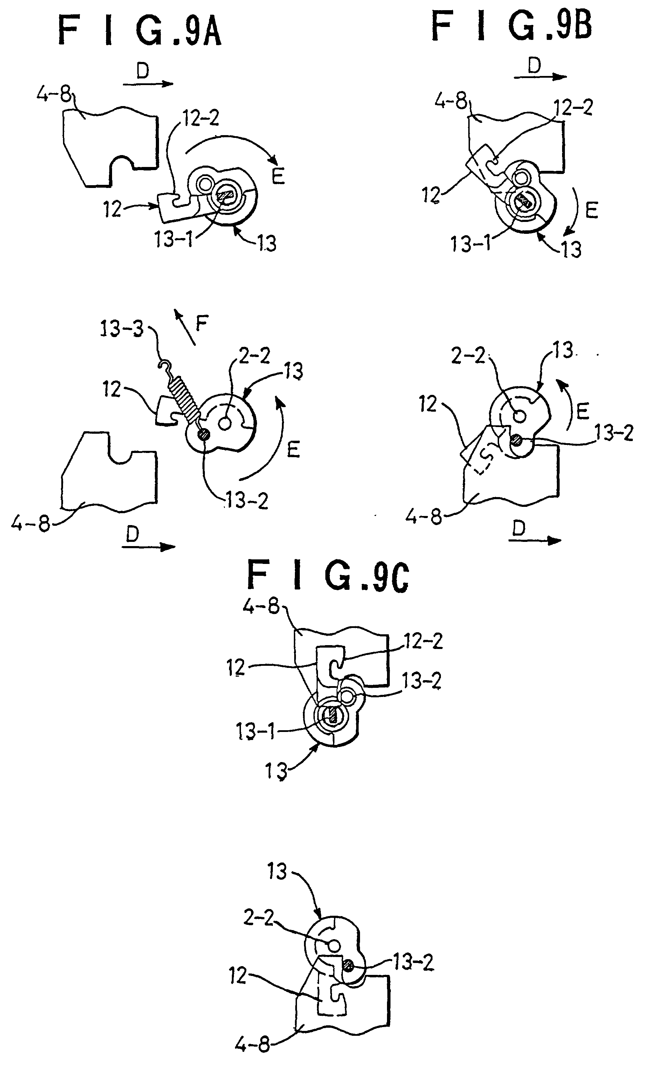

Fig. 8 is a front view of the main part of the apparatus of Fig. 1,
Figs. 9A to 9C are views of the main part of a threading mechanism in operation,

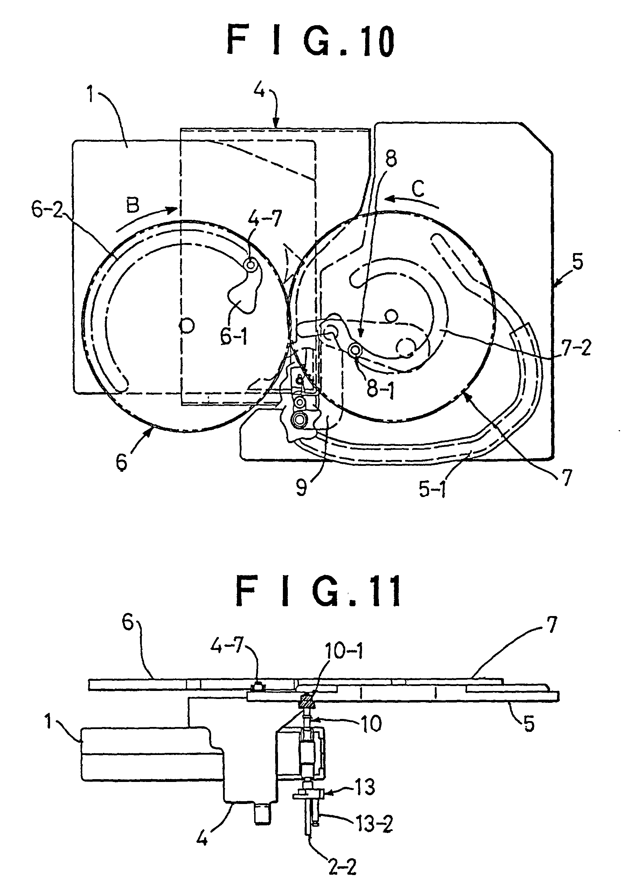

Fig. 10 is a plan view of the overall construction showing the loading position of the cartridge,
Fig. 11 is a front view of the main part shown in Fig. 10,

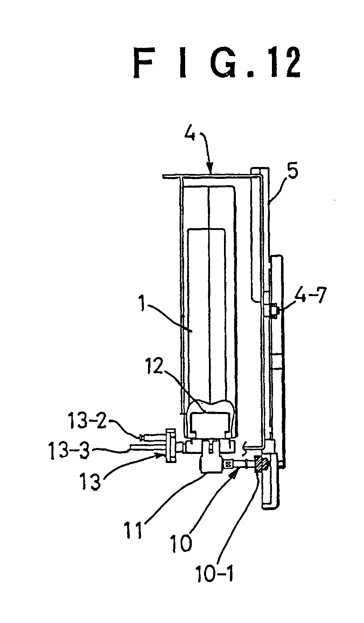

Fig. 12 is an end face view the main part shown in Fig. 10,

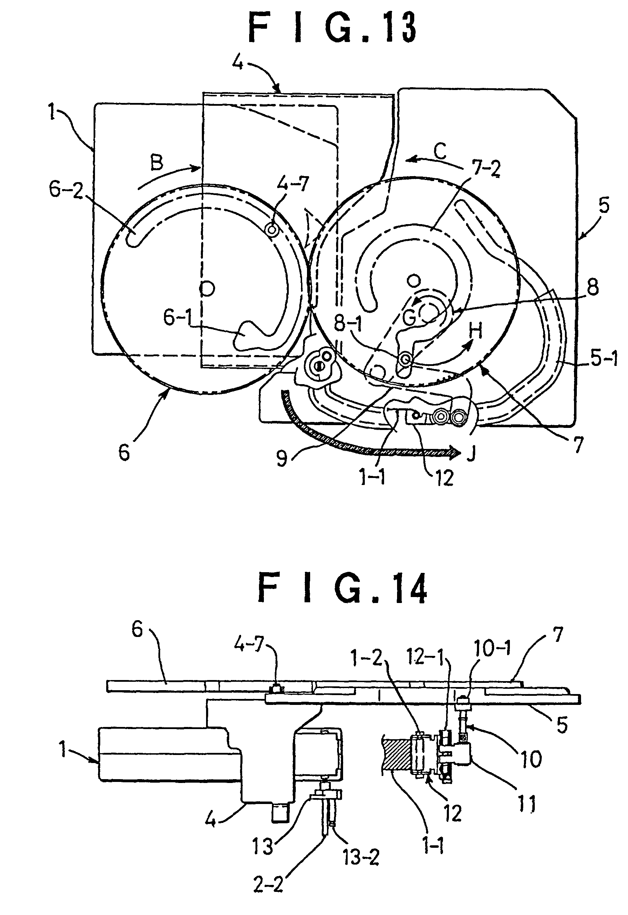

Fig. 13 is a plan view showing the overall construction of one arrangement of the threading mechanism,
Fig. 14 is a front view of the main part of Fig. 13,

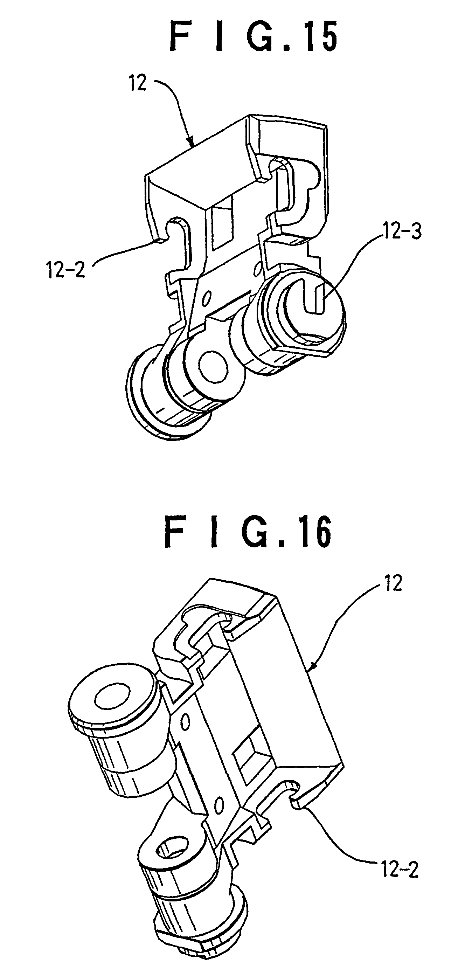

Fig. 15 is a side-inclined perspective view showing a leader block,
Fig. 16 is a perspective view from above of the leader block of Fig. 15,

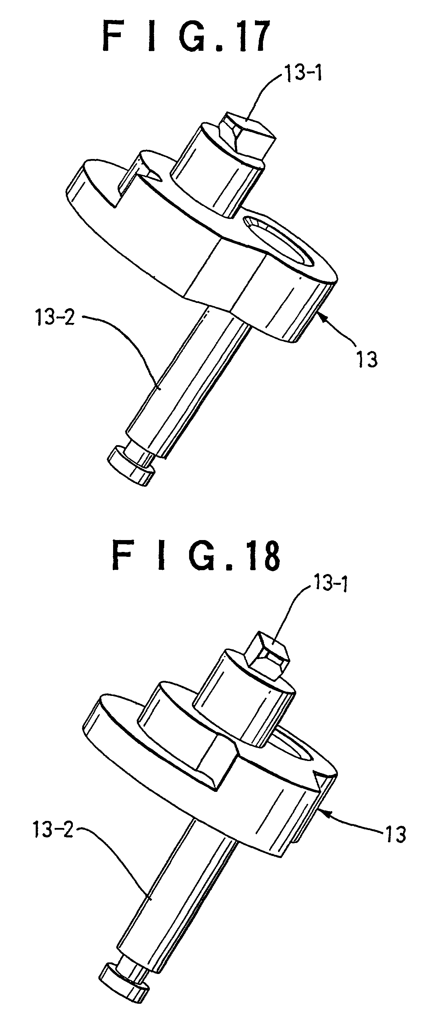

Fig. 17 is a perspective view from one side of a retractor,

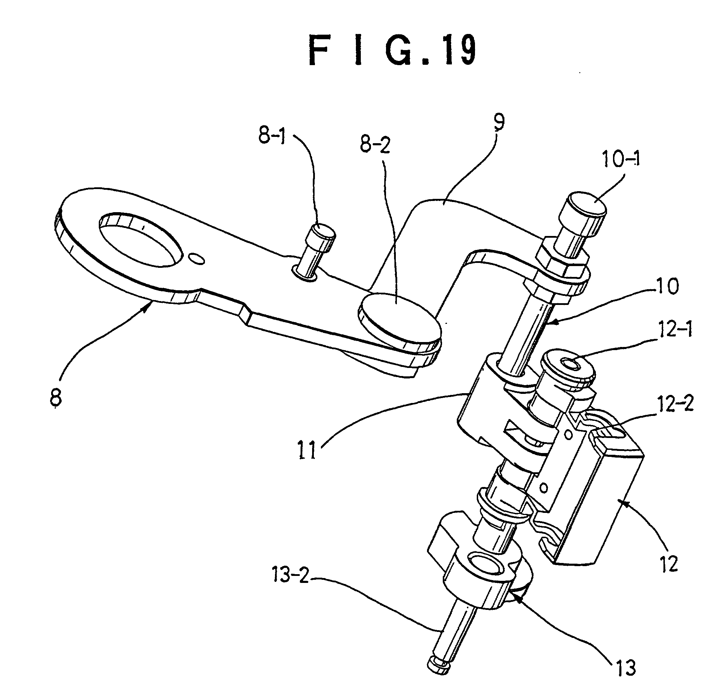

Fig. 18 is a perspective view from the other side of the retractor shown in Fig. 17,
Fig. 19 is a perspective view from an upperside of the overall construction of the threading mechanism,

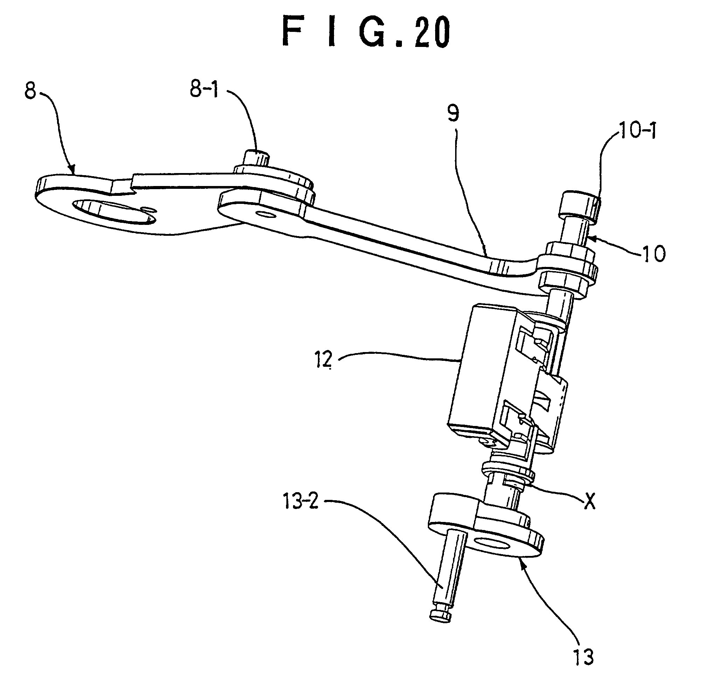

Fig. 20 is a perspective view from the lower side of the overall construction of the threading mechanism,

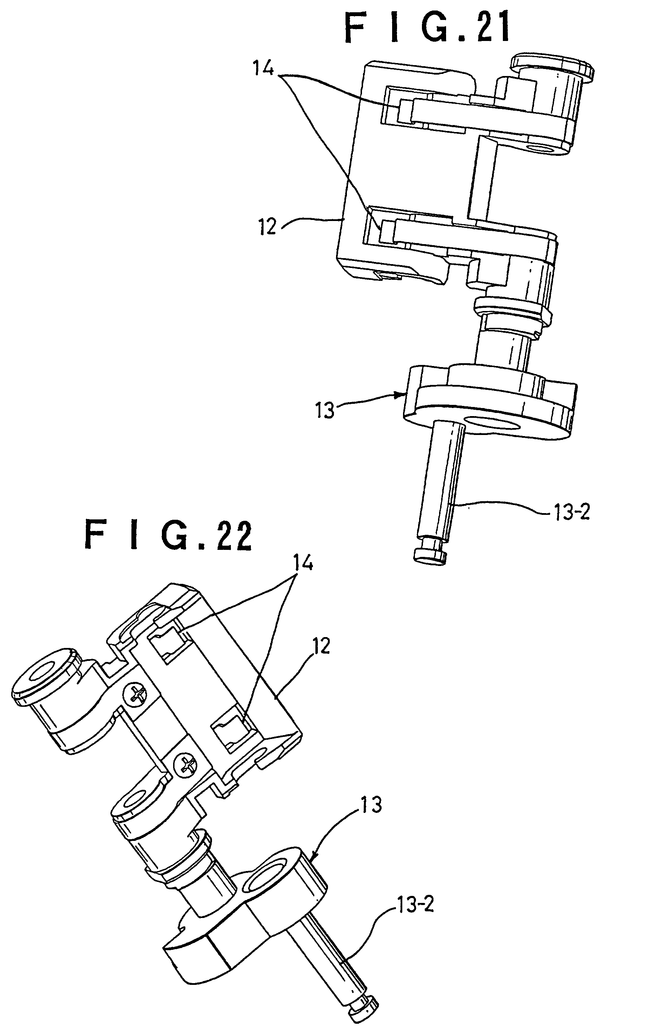

Fig. 21 is a perspective view from one side of the main part of another illustrative apparatus, and
Fig. 22 is a perspective view from the other side of the main part of the apparatus of Fig. 21.

Reference will first be made to Figs. 3A and 3B, in which a magnetic recording/reproducing apparatus is applied to a recording medium having magnetic tape 1-1 in single reel cartridge 1. The magnetic tape 1-1 has a leader pin 1-2 at the leading end thereof, and the upper and lower ends of the leader pin 1-2 are fitted into pin fixing grooves 1-3 formed at the upper and lower edges inside a tape inlet/outlet port of the cartridge 1, so as to be supported in the direction indicated -by an arrow A in Figs. 3A and 3B.

A loader guide 3, which is moulded from a panel, is mounted on the upper surface of a deck base 2, and there are bearing guide slits (or rails) 3-1 to 3-5 on both the side surfaces and upper surface of the loader guide 3. Further, there is a pin 3-6 on the upper surface of the loader guide 3.

A cartridge loader 4, which is guided in the loading direction on the deck base 2 along the loader guide 3 has bearings 4-1 to 4-4 at both of the side surfaces thereof, and bearings 4-5, 4-6 at the upper surface thereof. These bearings are movable along bearing guide slits (or rails) 3-1 to 3-4 (the guide slits corresponding to the bearings 4-3, 4-4 are not shown). Further, the cartridge loader 4 also has a loader drive roller 4-7 at the upper surface thereof. The loader drive roller 4-7 is so arranged that it penetrates through a slit 3-5 in the upper surface of the loader guide 3 and projects upwardly therefrom. The cartridge loader 4 has a retractor cam 4-8 at the lower portion thereof.

Further, the cam plate 5 is secured to the upper surface of the deck base 2 so as to confront the cartridge loading position. A threader guide groove 5-1 serving as a guide path for guiding a threader drive (described later) is formed on the lower surface of the cam plate 5, and there is a pivot shaft 5-2 on the upper surface of the cam plate 5. A threader drive gear 7 is freely rotatably supported by the pivot shaft 5-2.

Further, a loader drive gear 6, which is engaged with the threader drive gear 7, is freely rotatably supported on a pivot shaft 3-6 which is on the upper surface of the loader guide plate 3, and there is a loader drive cam groove, having a radial portion 6-1 and a peripheral portion 6-2, on the rear surface of the loader guide plate 3. The loader drive roller 4-7 is fitted in the loader drive cam groove so as to be guided along the loader drive cam groove. When the loader drive gear 6 is rotationally driven, the loader drive roller 4-7 is moved with the loader drive cam groove serving as a guide, and the cartridge loader 4, in which the cartridge 1 is inserted, is moved in the direction indicated by an arrow D in Fig. 7, whereby the cartridge 1 reaches the loading position (as shown in Fig. 10).

The threader drive gear 7 has a threader drive cam groove with a radial portion 7-1 and a peripheral portion 7-2 on the back surface thereof, and a threader drive roller 8-1 is fitted in the threader drive cam groove so as to be guided along the threader drive cam groove. There is a threader drive roller 8-1 on the upper surface of a threader drive arm 8, which is freely rotatably supported through the pivot shaft 2-1 to the deck base 2 side (in this apparatus, the upper surface of the cam plate 5), and it swings the threader drive arm 8 around the pivot shaft 2-1 through the threader drive cam groove as a result of the rotational motion of the threader drive gear 7.

A threading arm 9 is freely movably mounted to the tip of the threader drive arm 8 through a pin 8-2, and a threading pin 10 is supported at the tip of the threading arm 9. A threading roller 10-1 is secured to the upper end of the threading pin 10 (the detailed construction is shown in Figs. 19 and 20). The threading roller 10-1 is fitted in the threader guide groove 5-1 so as to be guided along the threader guide groove 5-1, and it makes a sliding motion along the threader guide groove 5-1 interlockingly with the motion of the threading arm 9.

The threading mechanism supports a threading block 11 at the lower portion of the threading pin 10, so that the threading block 11 is freely rotatable. A leader block 12 is freely rotatably supported at the side portion of the threading block 11 through a pin 12-1 (eccentric to the threading pin 10) (see Figs. 19 and 20). The leader block 12 has at the tip thereof a hook 12-2, which is hooked to the leader pin 1-2 to clamp (grasp) the leader pin 1-2, and there is a fitting groove 12-3 at the lower end portion of the hook 12-2 (see Fig. 15).

In association with the leader block 12, the retractor at the deck base side has, at the top portion of the retractor table (block) 13, a projection 13-1 which is detachably fitted to the fitting groove 12-3 (see X portion of Fig. 20), and the retractor table 13 is freely rotatably supported by the pivot shaft 2-2 provided to the deck base 2 (at the fitting position at which the projection 13-1 being fitted in the fitting groove 12-3, the pivot shaft 2-2 being coaxial with the pin 12-1). A further, retractor pin 13-2 is secured to the retractor table 13, and the retractor table 13 is pulled in a direction F (see Fig. 9A) by a retractor spring 13-3 fitted to the retractor pin 13-2.

Next, the threading mechanism will be described in the condition in which the cartridge is loaded.

In Fig. 7, the state of the threading mechanism is shown before the cartridge 1 is inserted into the cartridge loader 4 and fed to the cartridge loading position of the deck base 2, that is, the state of the threading mechanism is shown before the start of the loading operation. In this case, the loader drive roller 4-7 is located at the radial portion 6-1 of the loader drive cam groove, and the threading drive roller 8-1 is located at the peripheral portion 7-2 of the threader drive cam groove.

The leader block 12 is engaged with the retractor table 13 such that the projection 13-1 is fitted in the fitting groove 12-3, and pulled in the direction F by the retractor spring 13-3 (see Fig. 9A). First, when the cartridge 1 is inserted into the cartridge loader 4, the driving force needed (a driving source is not shown) is applied to the loader drive gear 6 to rotate the loader drive gear 6 in the direction indicated by an arrow B, whereby the loader drive roller 4-7 starts its sliding motion at the position of the radial portion 6-1 of the loader drive groove. With this motion, the bearings 4-1 to 4-6 are caused to slide along the bearing slits (or rails) 3-1 to 3-4 of the loader guide 3, and the cartridge loader 4 makes a straight motion in the direction indicated by an arrow D to load the cartridge 1 to the loading position (see Fig. 10).

Further, the threader drive gear 7 is rotated in the direction indicated by an arrow C by the rotation of the loader drive gear 6 (see Fig. 10). At this time, the threader drive roller 8-1 is located at the peripheral portion 7-2 of the threader drive cam groove, and thus the location thereof is not varied by the rotation of the threader drive gear 7. Accordingly, the threader drive arm 8 is kept stationary and the threading operation does not occur in the conditions shown in of Figs. 7 and 10.

However, the cartridge loader 4 further makes a sliding motion in the direction indicated by the arrow D by the further rotation of the loader drive gear 6 in the direction indicated by the arrow B, and at this time the retractor pin 13-2 is pushed in the direction indicated by the arrow D by the retractor cam 4-8 extending downwardly at the lower portion of the cartridge loader 4. Therefore, the retractor table 13 is rotated around the pivot shaft 2-2 in the direction indicated by an arrow E (see Figs. 9A to 9C).

In this case, since the projection 13-1 is fitted in the groove 12-3 (see the X portion of Fig. 20), the leader block 12 is also rotated by the rotation of the retractor table 13. At this time, the leader block 12 is guided to the tape inlet/outlet port of the cartridge 1, and the hook 12-2 is hooked to the leader pin 1-2 from the rear side of the loading direction, whereby the leader pin 1-2 is clamped (grasped).

At this point in time, the loader drive roller 4-7 completes its lane change from the radial portion 6-1 of the loader drive cam groove to the peripheral portion 6-2 thereof. Therefore, the loader drive roller 4-7 makes no further motion, even when the loader drive gear 6 further rotates, and thus is kept stationary at the current position. On the other hand, the threader drive roller 8-1 completes its lane change from the peripheral portion 7-2 of the threader drive cam groove to the radial portion 7-1 thereof, and it is moved by the rotation of the threader drive gear 7 so as to interchange with the loader drive roller 4-7, whereby the threader drive arm 8 is rotated from the condition shown in Fig. 10.

That is, the threader drive roller 8-1, which has completed its lane change to the radial portion 7-1 of the threader drive cam groove, experiences a driving force from the threader drive gear 7 as a result of the rotation of the threader drive gear 7 in the direction indicated by the arrow C, and by further rotating the threader drive arm 8, the threading arm 9 operates so as to guide the threading roller 10-1 in the threader guide groove 5-1. By further rotating the threader drive gear 7 in the direction indicated by the arrow C, the threader drive roller 8-1 is moved while travelling via a locus H, and the threader drive arm 8 is rotated around the pivot shaft 2-1. Through these operations, the leader block 12 is pulled in the direction indicated by an arrow J through the threading pin 10 and the threading block 11 (see Fig. 13), and the magnetic tape 1-1 is drawn out and guided to a reel (not shown) at the side of the apparatus, while the leader pin 1-2 is clamped by the hook 12-2.

The leader pin 1-2 is subjected to the threading operation as described above. The direction of the force acting on the leader block 12 at this time is parallel to the fitting direction between the groove 12-3 and the projection 13-1, so that the leader block 12 is released from the restraint of the retractor table 13 and is thus allowed to move in the direction indicated by the arrow J as described above.

When the magnetic tape 1-1 is stored in the cartridge 1, this operation can be performed by inversely rotating the loader drive gear 6, that is, by inversely tracing a series of operations, as described above. In this case, a reel motor (not shown) for rewinding the magnetic tape 1-1 itself may be provided to the deck base 2 so as to face the lower portion of the cartridge 1.

In a second apparatus illustrative of the present invention and shown in Figs. 21 and 22, plate springs 14 are added to the leader block 12 in the threading mechanism to enhance the certainty of the clamp (grasp) of the leader pin 1-2. That is, as shown in Figs. 21 and 22, the plate springs 14 (that is the elastically holding means) are secured so that they surround the leader block 12. In this second apparatus the plate springs 14 press the leader pin 1-2 at the fitting position of the leader pin 1-2 to enhance the holding power of the leader block 12 to the leader pin 1-2. Accordingly, the leader pin 1-2 can be restrained from falling off the leader block 12, due to an unintentional operation.

As described in the above arrangements, illustrative of the present invention, when the cartridge loader holding the cartridge is moved to the cartridge loading position of the deck base by the loader guide mounted on the deck base, the threader drive, which holds the leader pin and guides it to the reel through the guide path, rotates the leader block thereof, in cooperation of the retractor cam provided to the cartridge loader and the retractor provided to the deck base, to fit the hook of the leader block to the leader pin from the rear side thereof along the loading direction of the cartridge loader, thereby clamping the leader pin with the leader block, and then guides the leader pin to the guide path.

Accordingly, unlike in the previously proposed arrangements, it is unnecessary to perform a synchronizing adjustment between the retractor block and the threading pin accurately, and also the operation of clamping the leader pin with the retractor block is implemented by a simple rotation of the retractor block with a simple construction, so that a stable operation can be achieved.

It will be appreciated that, although the invention has been described, by way of example, with reference to particular apparatus shown in the accompanying drawings, variations and modifications thereof, as well as other apparatus may be conceived within the scope of the appended claims.

## Claims

1. A threading mechanism for taking out a leader pin (1-2) secured to one end of a magnetic recording tape (1-1) from a single reel cartridge (1), moving the leader pin to a predetermined guide path and threading the magnetic recording tape around a reel in a magnetic recording/reproducing apparatus; **characterised in that**:
the mechanism includes a cartridge loader (4) for holding the cartridge, a deck base (2) on which a loader guide (6) is mounted for moving the cartridge loader to a cartridge loading position, and a threader drive (7, 8, 9, 10, 11) for holding the leader pin and guiding the leader pin to the reel through the predetermined guide path when the cartridge loader is moved to the cartridge loading position, wherein the threader drive has a leader block (12) having a hook (12-2) arranged to hold the leader pin, and wherein the leader block is rotatable in order to engage the hook with the leader pin in cooperation with a retractor cam (4-8) provided on the cartridge loader and a retractor (8) provided on the deck base.

2. A threading mechanism as claimed in claim 1, wherein the hook (12-2) is arranged to engage with the leader pin (1-2) from the rear side of the leader pin along the loading direction of the cartridge loader (4).

3. A threading mechanism as claimed in claim 1, wherein, during the movement of the cartridge loader (4) to the cartridge loading position, the retractor (13) is rotated around the retractor pin (13-2) by the retractor cam (4-8), and the leader block (12) is rotated to engage the hook (12-2) with the leader pin (1-2), and wherein the retractor is detachably mounted to the leader block so that the leader block is released therefrom at the time at which the cartridge loader reaches the cartridge loading position.

4. A threading mechanism as claimed in claim 1, wherein the leader block (12) has elastically holding means (14) for elastically holding the leader pin (1-2) when the leader pin is clamped by the leader block.

## Patentansprüche

1. Einfädelmechanismus zum Herausnehmen eines an einem Ende eines Magnetbandes (1-1) gesicherten Führungsstifts (1-2) aus einer Einzelspulenkassette (1), Bewegen des Führungsstifts zu einem vorgegebenen Führungsweg und Einfädeln des Magnetbandes um eine Spule einer Magnetaufzeichnungs-/Wiedergabevorrichtung;
**dadurch gekennzeichnet, dass**
der Einfädelmechanismus aufweist: einen Kassettenlader (4) zum Halten der Kassette, eine Laufwerkbasis (2), auf der eine Laderführung (6) zum Bewegen des Kassettenladers zu einer Kassettenladeposition angeordnet ist, und einen Einfädelungsvorrichtungsantrieb (7, 8, 9, 10, 11) zum Halten des Führungsstifts und Führen des Führungsstifts zu einer Spule durch den vorgegebenen Führungsweg, wenn der Kassettenlader zur Kassettenladeposition bewegt wird, wobei der Einfädelungsvorrichtungsantrieb einen Führungsblock (12) mit einem Haken (12-2) zum Halten des Führungsstifts aufweist, und wobei der Führungsblock drehbar ist, um den Haken in Zusammenwirkung mit einer auf dem Kassettenlader angeordneten Aufrollmechanismuskurvenfläche (4-8) und einem auf der Laufwerkbasis angeordneten Aufrollmechanismus (8) mit dem Führungsstift in Eingriff zu bringen.

2. Einfädelmechanismus nach Anspruch 1, wobei der Haken (12-2) von der Rückseite des Führungsstifts (1-2) entlang der Laderichtung des Kassettenladers (4) mit dem Führungsstift in Eingriff kommt.

3. Einfädelmechanismus nach Anspruch 1, wobei während der Bewegung des Kassettenladers (4) zur Kassettenladeposition der Aufrollmechanismus (13) durch die Aufrollmechanismuskurvenfläche (4-8) um den Aufrollmechanismusstift (13-2) gedreht wird und der Führungsblock (12) derart gedreht wird, dass der Haken (12-2) mit dem Führungsstift (1-2) in Eingriff kommt, und wobei der Aufrollmechanismus am Führungsblock lösbar montiert ist, so dass der Führungsblock zu dem Zeitpunkt davon gelöst wird, zu dem der Kassettenlader die Kassettenladeposition erreicht.

4. Einfädelmechanismus nach Anspruch 1, wobei der Führungsblock (12) eine elastische Halteeinrichtung (14) zum elastischen Halten des Führungsstifts (1-2) aufweist, wenn der Führungsstift durch den Führungsblock festgeklemmt ist.

## Revendications

1. Mécanisme d'amorçage pour sortir une broche d'amorce (1-2) fixée sur une extrémité d'une bande magnétique d'enregistrement (1-1) d'une cartouche monobobine (1), en déplaçant la broche d'amorce vers un chemin de guidage prédéterminé et en amorçant la bande magnétique d'enregistrement autour d'une bobine dans un appareil d'enregistrement/de reproduction magnétique ; **caractérisé en ce que** :
le mécanisme comprend un chargeur de cartouche (4) pour maintenir la cartouche, une platine (2) sur laquelle un guide de chargeur (6) est monté pour déplacer le chargeur de cartouche vers une position de chargement de la cartouche et un mécanisme d'entraînement d'amorçage (7, 8, 9, 10, 11) pour maintenir la broche d'amorce et diriger la broche d'amorce vers la bobine à travers le chemin de guidage prédéterminé lorsque le chargeur de cartouche est déplacé vers la position de chargement de cartouche, dans lequel le mécanisme d'entraînement d'amorçage a un bloc d'amorce (12) comprenant un crochet (12-2) conçu pour maintenir la broche d'amorce et dans lequel le bloc d'amorce peut tourner pour mettre en prise le crochet avec la broche d'amorce en coopération avec une came d'enrouleur (4-8) prévue sur le chargeur de cartouche et un enrouleur (8) prévu sur la platine.

2. Mécanisme d'amorçage selon la revendication 1, dans lequel le crochet (12-2) est conçu pour venir en prise avec la broche d'amorce (1-2) à partir de la face arrière de la broche d'amorce le long du sens de chargement du chargeur de cartouche (4).

3. Mécanisme d'amorçage selon la revendication 1, dans lequel, au cours du déplacement du chargeur de cartouche (4) vers la position de chargement de cartouche, l'enrouleur (13) tourne autour de la broche d'enrouleur (13-2) au moyen de la came d'enrouleur (4-8) et le bloc d'amorce (12) tourne pour mettre en prise le crochet (12-2) avec la broche d'amorce (1-2) et dans lequel l'enrouleur est monté de manière amovible sur le bloc d'amorce de sorte que le bloc d'amorce en est libéré au moment où le chargeur de cartouche atteint la position de chargement de cartouche.

4. Mécanisme d'amorçage selon la revendication 1, dans lequel le bloc d'amorce (12) a des moyens de maintien élastiques (14) pour maintenir de manière élastique la broche d'amorce (1-2) lorsque la broche d'amorce est serrée par le bloc d'amorce.
